# EUROPÄISCHE PATENTSCHRIFT

(11) **EP 1 430 779 B1**
(45) Veröffentlichungstag und Bekanntmachung des Hinweises auf die Patenterteilung: **15.11.2006**
(21) Anmeldenummer: 03029379.9
(22) Anmeldetag: 19.12.2003
(51) Int. Cl.: A22C 11/10

(54) **Portionier- und/oder Führungsvorrichtung insbesondere für Wursthüllen**
Device for linking and/or guiding in particular sausage casings
Dispositif pour former et guider des portions séparées, notamment des saucisses

(30) Priorität: 20.12.2002 DE 20220038 U
(43) Veröffentlichungstag der Anmeldung: 23.06.2004
(73) Patentinhaber: VEMAG MASCHINENBAU GmbH, 27283 Verden/Aller (DE)
(72) Erfinder: Köhler, Sven, 27313 Dörverden (DE); Knodel, Peter, 27283 Verden-Hönisch (DE); Wendebourg, Ilona, 31609 Balge (DE)
(74) Vertreter: Eisenführ, Speiser & Partner

(56) Entgegenhaltungen:
- DE-A- 2 054 441
- FR-A- 1 184 558
- US-A- 3 873 744
- US-A- 4 972 547
- US-A- 5 141 096
- US-A- 5 709 600

## Beschreibung

Die Erfindung betrifft eine Portionier- und/oder Führungsvorrichtung zum Portionieren und/oder Führen länglicher Hüllen, insbesondere Wursthüllen aus Kunst- oder Naturdärmen, mit mindestens einem umlaufenden Transportelement zum Transportieren der befüllten Hülle und mindestens einem Abteil- oder Führungselement zum Portionieren oder Führen der befüllten Hülle. Die Erfindung betrifft weiterhin ein Abteil- oder Führungselement, das in einer Portionier- und/oder Führungsvorrichtung wie oben beschrieben verwendet werden kann.

Bei bekannten Verfahren und Vorrichtungen zur Herstellung von Würstchen werden Kunst- oder Naturdärme mit Fleischbrät befüllt, und dann in einem Längenportioniergerät in Teile gleicher Länge unterteilt. Ein Beispiel eines solchen Längenportioniergerätes, wie in US 5,141,096, besteht im wesentlichen aus zwei umlaufenden Ketten, die abschnittsweise mit gleicher Geschwindigkeit nebeneinander herlaufen und zwischen sich den befüllten Darm führen. In Abständen von etwa der Länge eines Würstchens weisen die Ketten Abteilelemente auf, die jeweils paarweise mit einem Element an jeder Kette zusammenlaufen und dabei den befüllten Darm bis auf eine kleine Dicke abschnüren. Üblicherweise werden die Würstchen an dieser abgeschnürten Stelle noch gegeneinander verdreht. Zwischen den Abteilelementen befinden sich Führungselemente auf den Ketten, die den befüllten Darm lediglich halten und mit der Bewegung der Ketten mitführen.

Bei bekannten Längenportioniergeräten sind die Abteilelemente und die Führungselemente üblicherweise auf die Kette genietet. Aufgrund dieser festen Verbindung ist es nicht möglich, Abteil- oder Führungselemente wieder von der Kette zu lösen. Das führt dazu, dass der Abstand zwischen den Abteilelementen nicht veränderbar ist und eine Umstellung eines solchen Längenportioniergerätes auf eine andere Würstchenlänge daher nur durch Wechsel der Kette möglich ist. Weiterhin ist auch eine Umrüstung eines solchen Längenportioniergerätes auf eine andere Würstchendicke, die eine andere Größe der Führungselemente erfordern würde, ähnlich aufwändig wie das Verändern von Abteilelementen. Weiterhin ist der Tausch von Verschleißteilen wie der Kette oder den Abteil- oder Führungselementen nur möglich, indem die Kette vollständig einschließlich der Abteil- und Führungselemente getauscht wird.

Weiterhin kommt das Problem hinzu, dass bei der Herstellung der Würstchen in Folge der Verwendung von Ketten, die in aller Regel aus Metall gefertigt sind, ein hohe Geräuschentwicklung auftritt, die unangenehm ist und mitunter Lärmschutzmaßnahmen erforderlich macht.

Erste Verbesserungen bei einem Längenportioniergerät sind bekannt, bei denen die Abteil- und/oder Führungselemente auf die Kette geschraubt sind. Das Wiederlösen von Abteil- und/oder Führungselementen ist hier grundsätzlich möglich, wobei der Aufwand jedoch ebenfalls erheblich ist. Das liegt zum Einen daran, dass für jedes zu lösende Element regelmäßig mehrere Schrauben gelöst werden müssen, und dass zum Anderen die Schrauben zum Innenbereich der jeweiligen umlaufenden Kette gerichtet sind, wodurch sich der Zugang zu den Schrauben erschwert. Weiterhin bleibt das Problem der hohen Geräuschentwicklung, die sich durch die Verwendung von Schrauben nicht verringert.

Der Erfindung liegt daher die Aufgabe zugrunde, eine Portionier- und/oder Führungsvorrichtung bereitzustellen, die den oben genannten und weiteren Problemen entgegenwirkt. Insbesondere soll eine Möglichkeit zum einfachen Befestigen und Lösen von Abteil- und/oder Führungselementen auf einem umlaufenden Transportelement geschaffen werden.

Erfindungsgemäß wird, bei einer Portionier- und/oder Führungsvorrichtung der obigen Art vorgeschlagen, dass das Abteil- oder Führungseliameht mittels formschlüssiger Verbindung mit dem Transportelement in Eingriff steht und das Transportelement als Zahnriemen ausgebildet ist, wobei das Abteil- oder Führungselement an der den Zahnriemenzfihnen abgewandten Seite mittels Schnappverbindung lösbar befestigbar ist.

Erfindungsgemäß lässt sich ein Führungs- oder Abteilelement an dem Transportelement befestigen. Ein Abteil- oder Führungselement wird hierzu auf dem Transportelement angeordnet und steht formschlüssig mit ihm in Eingriff. Es sind keine zusätzlichen Befestigungsmittel wie z. B. Nieten oder Schrauben erforderlich, so dass auch die Bereitstellung entsprechenden Werkzeugs entfallen kann. Die Anordnung der Abteil- oder Führungselemente auf dem Transportelement ist somit besonders einfach. Hierdurch können Installations- und Deinstallationszeiten wesentlich verkürzt werden. Außerdem sinkt auch die Anzahl der möglichen Fehlerquellen, und für das Tauschen von Verschleißteilen bzw. das Umrüsten der Anlage ist nur eine geringe Anzahl unterschiedlicher Teile vorrätig zu halten. Die Einsparung von Lagerkosten ist damit eine weitere Folge.

Erfindungsgemäß wird erreicht, dass ein Längenportioniergerät auf einfache Weise umgerüstet bzw. verschleißende Teile auf einfache Weise ersetzt werden können. So lässt sich beim Betreiber selbst gegebenenfalls eine Anpassung an verschiedene Wurstlängen erzielen, indem die Abteilelemente versetzt werden. Vorraussetzung hierfür ist lediglich, dass die Zahnriemenlänge ganzzahlig teilbar ist durch die jeweilige Wurstlänge. Ein vollständiger Austausch von Ketten entfällt somit. Dadurch kann auch eine Verringerung der Lagerkosten erreicht werden, denn es müssen nicht eine Vielzahl von vollständigen metallischen Ketten vorgehalten werden, wie dies bisher der Fall war. Die Standzeiten werden ferner reduziert, weil ein Umrüstvorgang oder das Tauschen verschlissener Teile schnell durchgeführt werden kann.

Erfindungsgemäß ist das Abteil- oder Führungselement mittels Schnappverbindung an dem Transportelement lösbar befestigt. Eine derartige Schnappverbindung lässt sich auf besonders einfache Weise schnell herstellen und wieder lösen. Unter Schnappverbindung soll hier im wesentlichen verstanden werden, dass an dem Abteil- oder Führungselement und/oder dem Transportband solche konstruktiven Mittel vorgesehen sind, die derartig elastisch verformbar sind, dass sich beim Herstellen der Verbindung Abschnitte so verformen oder verbiegen lassen, dass sich die Verbindung herstellen lässt und sich anschließend die Abschnitte aufgrund Ihrer Elastizität wieder rückverformen in ihre ursprüngliche Stellung und in dieser dann eine formschlüssige, hintergreifende eingeschnappte oder verrastete Befestigungsstellung besteht.

Erfindungsgemäß ist das Transportelement als Zahnriemen ausgebildet. Diese sind im Allgemeinen so fest, dass darauf Abteil- oder Führungselemente angeordnet werden können. Weiterhin sind sie in ihrer Längsrichtung weitgehend starr, wohingegen sie dennoch leicht um Räder, wie zum Beispiel Synchronscheiben geführt und von diesen angetrieben werden können. Zahnriemen sind kostengünstig zu fertigen und weisen aufgrund moderner Werkstoffe gute Betriebseigenschaften auf, zu denen beispielsweise ein hohe Festigkeit bei geringem Gewicht gehört.

Bei einer bevorzugten Ausführungsform weist das Transportelement mindestens einen Halteabschnitt zum Aufnehmen von mindestens einem der Abteil- oder Führungselemente auf. Auf einem solchen Halteabschnitt kann ein Abteil- oder Führungselement befestigt werden. Es ist auch möglich, ein im Handel bekanntes Transportelement zu verwenden und lediglich Halteabschnitte zu ergänzen. Auf diese Weise kann ein Transportelement mit Halteabschnitten auf einfache und kostengünstige Weise hergestellt werden.

Vorzugsweise weist der Halteabschnitt Stützelemente zum Aufnehmen von Quer- und/oder Drehkräften auf. Ein Abteil- oder Führungselement wird vorzugsweise durch Schnappverbindung an dem Transportelement befestigt und damit formschlüssig gehalten. Die Schnappverbindung verhindert, dass sich das Abteil- oder Führungselement ungewollt löst. Weiterhin verhindert die formschlüssige Schnappverbindung das Verrutschen des Abteil- oder Führungselementes auf dem Transportelement in einer Richtung. Die Stützelemente des Halteabschnitts verhindern ein Verrutschen des Abteil- oder Führungselementes in einer Richtung quer zu der Richtung, in der das Verrutschen durch die Schnappmittel verhindert wird. Weiterhin können diese Stützelemente Drehmomente aufnehmen und somit das Kippen des Abteil- oder Führungselementes verhindern. Weiterhin ist durch diese Stützelemente die Position, an der das Abteil- oder Führungselement zu befestigen ist genau festgelegt. Die Stützelemente erfüllen damit gleichzeitig die Aufgabe eine Justierung des Abteil- oder Führungselementes überflüssig zu machen.

Gemäß einer bevorzugten weiteren Ausgestaltung ist der Halteabschnitt im Querschnitt etwa U-förmig ausgebildet. Hierbei bilden die beiden Schenkel des Us die Stützelemente. Das Halteelement mit Stützelementen ist hiermit auf einfache Weise ausgebildet und kann dabei die oben genannten Aufgaben des Halteelementes erfüllen.

Zweckmäßigerweise ist das Transportelement als Zahnriemen ausgebildet, wobei das Abteil- oder Führungselement an der dem Zahnriemenzähnen abgewandten Seite mittels Schnappverbindungen befestigbar ist. Hier kann der Zahnriemen umlaufend von mehreren Zahnrädern geführt werden, wobei die Zähne des Zahnriemens dann nach innen in Richtung der Zahnräder wie beispielsweise Synchronscheiben, weisen. An der Außenseite kann dann das Abteil- oder Führungselement leicht durch verrasten befestigt werden, weil der Zahnriemen hier leicht zugänglich ist. Weiterhin behindern die Abteil- oder Führungselemente in einer solchen Anordnung nicht die Bewegung.

Entsprechend einer weiteren Ausgestaltung weist das Transportelement Aussparungen zum Befestigen des Abteil- und/oder Führungselementes auf. Solche Aussparungen können beispielsweise als Löcher in dem Transportelement vorgesehen sein, die paarweise zum Halten eines Abteil- oder Führungselements ausgebildet sind. Zum Befestigen ragen entsprechende Halteabschnitte eines Abteil- oder Führungselementes durch die Aussparungen hindurch und sind dann im Randbereich der Aussparungen mit dem Transportelement verklammert. Hierfür können die Befestigungsabschnitte an dem Abteil- oder Führungselement beispielsweise hakenförmig ausgebildet sein. Durch eine Anpassung der Aussparungen auf die Befestigungsabschnitte des Abteil- oder Führungselements kann ein fester Sitz des Abteil- oder Führungselements auf dem Transportelement sowohl in Bewegungsrichtung als auch quer dazu erreicht werden. Bei einer paarweisen Anordnung der Aussparungen kann zudem eine Verdrehsicherung des befestigten Abteil- oder Führungselements erreicht werden.

Gemäß einer Weiterbildung ist an dem Transportelement mindestens ein Führungselement zum Führen der befüllten Hülle und mindestens ein Abteilelement zum Portionieren der Hülle mittels Schnappverbindung lösbar befestigt. Zum Herstellen der Würstchen können Abteilelemente und Führungselemente unterschiedliche Aufgaben erfüllen. Führungselemente führen die befüllte Hülle, meist aus Kunst- oder Naturdarm, indem sie paarweise ein Teil der befüllten Hülle festhalten und in ihrer Synchronbewegung mit sich mitnehmen. Für die Führungselemente ist daher auch der Begriff Mitnehmer bekannt. Um ein gleichmäßiges Führen der befüllten Hülle zu gewährleisten können eine Vielzahl von Führungselementen eingesetzt werden.

Um gleichzeitig während die befüllte Hülle geführt wird diese auch abzuteilen, sind an einigen Stellen des Transportelementes Abteilelemente angeordnet, die somit dabei das Portionieren durchführen. Sowohl die Führungs- als auch die Abteilelemente sind mittels Schnappverbindung lösbar befestigt. Für die Umrüstung der Anlage für beispielsweise die Herstellung längerer Würstchen können Abteilelemente von dem Transportelement gelöst und mit größerem Abstand zueinander wieder befestigt werden. Dabei können die Abteilelemente an Positionen befestigt werden, an denen vorher Führungselemente befestigt waren.

In gleicher Weise werden Führungselemente an den Positionen auf dem Transportelement befestigt, an denen zuvor für die Herstellung der kürzeren Würstchen Abteilelemente saßen. Durch die Verwendung der Schnappverbindung kann die beschriebene Umrüstung einfach und schnell durchgeführt werden.

Gemäß einer weiteren Ausgestaltung ist das Transportelement, der Halteabschnitt, das Abteil- und/oder das Führungselement aus Kunststoff gefertigt. Durch die Verwendung von Kunststoff ergibt sich eine leichte Bauweise wobei zusätzlich eine Korrosionsbeständigkeit erreicht werden kann. Weiterhin hat die Verwendung von Kunststoff einen geringeren Geräuschpegel als beispielsweise bei der Verwendung von Metall zur Folge. Der zur Befestigung des Abteil- oder Führungselementes verwendete Schnappmechanismus ist besonders effizient ausgestaltbar, wenn das verwendete Material etwas elastisch ist. Eine solche Anforderung ist mit Hilfe von Kunststoffen leicht zu erfüllen.

In einer weiteren Ausgestaltung weist das Abteil- oder Führungselement einen Befestigungsabschnitt mit Schnappmitteln zum lösbaren Befestigen des Abteil- oder Führungselementes auf dem Transportelement auf. Hierbei können die Schnappmittel elastisch oder auch starr ausgebildet sein, wenn im zweiten Fall das Transportelement eine Elastizität aufweist. Hierdurch kann erreicht werden, dass das Abteil- oder Führungselement rastbar befestigbar ist wobei das Transportelement auf einfache Weise ausgebildet sein kann, wenn das Schnappmittel jeweils an dem zu befestigenden Element ausgebildet ist.

Vorzugsweise weist das Schnappmittel mindestens zwei sich paarweise etwa gegenüberliegend angeordnete Vorsprünge auf. Diese Vorsprünge sind so angeordnet, dass zwischen ihnen ein Abschnitt des Transportelementes liegt, auf dem sie befestigt sind. Eine solche Ausgestaltung des Schnappmittels ist auf einfache Weise realisierbar.

Bei einer bevorzugten Ausführungsform weist das Schnappmittel mindestens einen hakenartigen Abschnitt zum Hinterklammern des Transportelementes auf. Ein solcher hakenartiger Abschnitt kann insbesondere an den sich paarweise gegenüberliegenden Vorsprüngen angeordnet sein. Damit kann der Befestigungsabschnitt auf dem Transportelement sitzen, indem zwischen den beiden Vorsprüngen ein Teil des Transportelementes, insbesondere der Halteabschnitt aufgenommen wird wobei der Hakenabschnitt verhindert, dass der Befestigungsabschnitt wieder herunterrutschen kann. Ebenfalls kann ein solcher hakenartiger Abschnitt günstig zum Befestigen durch eine Aussparung des Transportelements geführt werden.

Bevorzugt ist der Befestigungsabschnitt des Abteil- oder Führungselements zum mindestens teilweisen Umgreifen des Transportelements ausgebildet. In diesem Fall ist die Verwendung eines einfach gestalteten Transportelements, insbesondere Zahnriemens möglich. Ein Abteil- oder Führungselement kann hierbei auf einfache Weise an der den Zähnen abgewandten Seite eines Zahnriemens befestigt werden, wobei der Befestigungsabschnitt um beide Ränder des Zahnriemens herumgreift und teilweise zwischen Zähne des Zahnriemens greift. Dadurch, dass der Halteabschnitt zwischen die Zähne greift, kann das auf dem Zahnriemen befestigte Abteil- oder Führungselement durch die Zähne des Zahnriemens in Bewegungsrichtung auf dem Zahnriemen geführt werden. Es sind somit an dem Zahnriemen keine weiteren Halte- oder Befestigungsabschnitte notwendig.

Gemäß einer weiteren günstigen Ausführungsform ist die Portionier- und/oder Führungsvorrichtung dadurch gekennzeichnet, dass das dadurch gekennzeichnet, dass das Abteil- und/oder Führungselement mit Führungsabschnitten zum Führen des Transportelements (2) entlang mindestens einer Antriebsrolle oder ein Leitelement, insbesondere einer Synchronscheibe (8). Hierdurch kann eine besonders einfache Ausgestaltung des Transportelements, insbesondere eines Zahnriemens und eine sehr einfach Führung eines Zahnriemens erreicht werden. Ein Herunterrutschen des Zahnriemens von der Synchronscheibe in zur Synchronscheibe axialen Richtung kann hierbei allein durch das Befestigen der Abteil- und/oder Führungselement auf dem Zahnriemen erreicht werden. Auf eine konstruktive Anpassung kann sowohl beim Zahnriemen als auch bei der Synchronscheibe verzichtet werden.

Eine solche Führung des Zahnriemens kann beispielsweise dadurch erreicht werden, dass das Abteil- oder Führungselement im befestigten Zustand den Zahnriemen beidseitig umklammert und dabei ebenfalls beidseitig in einen Zwischenraum zwischen zwei Zähnen des Zahnriemens greift. Auf dem Zahn der Synchronscheibe, der ebenfalls in diesen Zwischenraum greift, wird der Zahnriemen durch seine beiden genannten Zähne in Bewegungsrichtung und durch die umgreifenden Abschnitte des Abteil- oder Führungselementes quer zur Bewegungsrichtung gehalten.

In einer weiteren Ausgestaltung ist der Befestigungsabschnitt in auf dem Transportsband befestigen Zustand mit dem Halteabschnitt verklammert. Hierbei sind der Befestigungsabschnitt und der Halteabschnitt jeweils beide etwa U-förmig ausgebildet, wobei sich diese U-Formen mit ihrer Öffnung gegenüberliegen und um etwa 90° zueinander verdreht sind. In der so beschriebenen Anordnung zueinander umfassen und umklammern sich der Befestigungsabschnitt und der Halteabschnitt gegenseitig. Hierdurch wird eine besonders wirksame Befestigung erreicht.

Die Erfindung wird nachstehend anhand eines Ausführungsbeispieles unter Bezugnahme auf die Figuren näher erläutert, es zeigen:
- Figur 1: eine Portionier- und Führungsvorrichtung in einer Draufsicht,
- Figur 2: die Portionier- und Führungsvorrichtung der Figur 1 in einer Seitenansicht,
- Figur 3: die Portionier- und Führungsvorrichtung der Figur 1 bzw. 2 in einer Vorderansicht,
- Figur 4: einen Abschnitt eines Transportelementes mit drei darauf montierten Führungselementen in einer Vorderansicht,
- Figur 5: auf dem Transportelement montierte Führungselemente in einer Schnittansicht entlang der Schnittlinie A-A gemäß Figur 4,
- Figur 6: drei auf einem Transportelement montierte Führungselemente in einer Schnittansicht entlang der Kante B-B gemäß Figur 4,
- Figur 7: einen Halteabschnitt mit einem darauf montierten Führungselement,
- Figur 8: ein Abteilelement in einer Vorderansicht,
- Figur 9: ein Abteilelement in einer Schnittansicht entlang der Kante C-C gemäß Figur 8,
- Figur 10: ein Abteilelement in einer Schnittdarstellung entlang der Kante D-D gemäß Figur 8,
- Figur 11: ein Führungselement in einer Seitenansicht,
- Figur 12: ein Führungselement in einer Schnittdarstellung entlang der Kante E-E gemäß Figur 11,
- Figur 13: eine Vorrichtung zum Befüllen von Kunst- oder Naturdärmen in einer Seitenansicht,
- Figur 14: die Befüllungsvorrichtung gemäß Figur 13 in einer Draufsicht,
- Figur 15: einen Abschnitt eines Transportelementes mit fünf darauf montierten Führungselementen sowie einem darauf montierten Abteilelement in einer Vorderansicht gemäß einer alternativen Ausführungsform,
- Figur 16: ein auf dem Transportelement montiertes Führungselement in einer Schnittansicht entlang der Linie A-A gemäß Figur 15 zusammen mit einer Synchronscheibe und einem vom Transportelement gelösten Führungselement,
- Figur 17: einen Abschnitt eines Transportelementes mit fünf darauf montierten Führungselementen sowie einem Abteilelement in einer Vorderansicht gemäß einer weiteren alternativen Ausgestaltung,
- Figur 18: ein auf dem Transportelement montiertes Führungselement in einer Schnittansicht entlang der Schnittlinie A-A gemäß Figur 17 sowie einer Synchronscheibe und einem von dem Transportelement gelösten Führungselement, und
- Figur 19: einen Abschnitt eines Transportelementes mit fünf darauf montierten Führungselementen sowie einem Abteilelement gemäß Figur 17 in einer Draufsicht mit einer Synchronscheibe.

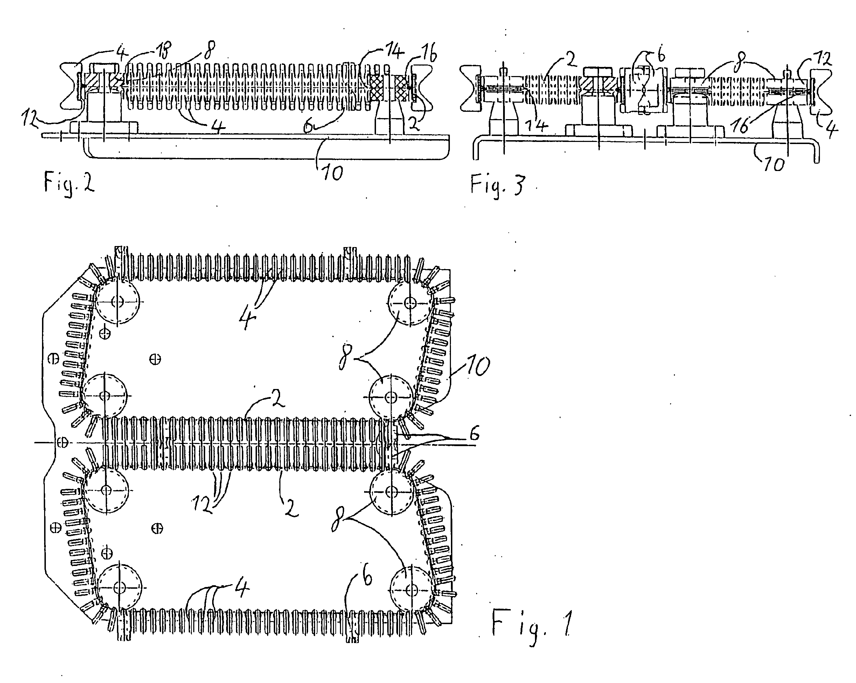

Die in Figur 1 gezeigte erfindungsgemäße Portionier- und Führungsvorrichtung besteht im Wesentlichen aus zwei Transportelementen 2 mit einer Vielzahl darauf montierter Führungselemente 4 und einiger auf dem Transportelement montierter Abteilelemente 6. Die beiden Transportelemente 2 werden jeweils durch vier Synchronscheiben 8 bewegt und darauf geführt, die auf einer Befestigungsplatte 10 montiert sind. Die beiden Transportelemente 2 laufen zueinander synchronisiert, so dass jeweils immer zwei Führungselemente 4 bzw. zwei Abteilelemente 6 in einem Bereich, der etwa in der Mitte der Figur 1 dargestellt ist, paarweise nebeneinander herlaufen. Die Bewegungsrichtung ist in diesem Bereich nach links gerichtet. Im Betrieb der Vorrichtung nähern sich die Führungs- und Abteilelemente einander an der rechten Seite und umschließen dabei paarweise den befüllten Darm, der hier nicht dargestellt ist, und bewegen sich mit ihm weiter nach links. In gleichmäßigen Abständen nähern sich anstelle eines Paares von Führungselementen 4 ein Paar von Abteilelementen 6. Die Abteilelemente 6 ragen weiter von dem Transportelement 2 hervor als die Führungselemente 4. Wenn sich ein Paar Abteilelemente 6 nähert wird dadurch der befüllte Darm nicht nur umschlossen, sondern auch zusammengedrückt, so dass an dieser Stelle zwei Teile des befüllten Darms gegeneinander abgeteilt werden. Hierdurch entsteht das Ende eines Würstchens und gleichzeitig der Anfang eines nächsten Würstchens.

Das Transportelement 2 weist an der den Führungs- bzw. Abteilelementen 4, 6 gegenüberliegenden Seite Zähne 12 auf, die in die Synchronscheiben 8 eingreifen können, so dass das Transportelement 2 von den Synchronscheiben 8 schlupffrei bewegt werden kann. Hierdurch ist unter anderem die zueinander synchrone, paarweise Bewegung der Führungs- und Abteilelemente gewährleistet.

Wie Figur 2 zeigt, sind auf der Befestigungsplatte 10 die Synchronscheiben 8 drehbar gelagert. Auf den Synchronscheiben 8 wird das Transportelement 2, das hier als Zahnriemen ausgebildet ist, geführt. Die Synchronscheibe 8 weist eine umlaufende Nut 14 auf, in der eine Nase 16 des Transportelementes 2 läuft, so dass das Transportelement 2 nicht von den Synchronscheiben 8 herunterrutschen kann. Die Zähne 18 der Synchronscheiben 8 und die Zähne 12 des Zahnriemens 2 sind oberhalb und unterhalb der Nut bzw. der Nase angeordnet. Durch sie wird die Bewegung von den Synchronscheiben 8 auf das Transportelement 2 übertragen.

In Figur 2 ist außerdem zu erkennen, dass die Führungselemente 4 und die Abteilelemente 6, von denen in dieser Figur nur eines dargestellt ist, das Transportelement 2 in beide Richtungen in der Höhe überragen.

Figur 3 zeigt die Transport- und Führungsvorrichtung von einer Vorderansicht. Auf der Befestigungsplatte 10 sind die Synchronscheiben 8 drehbar gelagert,
wobei auf Ihnen die Transportelemente 2 mit den Führungselementen 4 und den Abteilelementen 6 geführt und bewegt werden. In der Mitte der Darstellung sind zwei Abteilelemente 6 zu erkennen, die hier so zueinander angeordnet sind, dass zwischen ihnen nur ein sehr kleiner Zwischenraum verbleibt. Dieser Zwischenraum ist so groß, dass der Darm noch Platz findet, jedoch die Füllung nicht mehr. Die Führungselemente 4 sind hingegen so gestaltet, dass sie, während sie paarweise zusammenlaufen, den befüllten Darm halten können, ohne dabei die Füllung zu verdrängen.

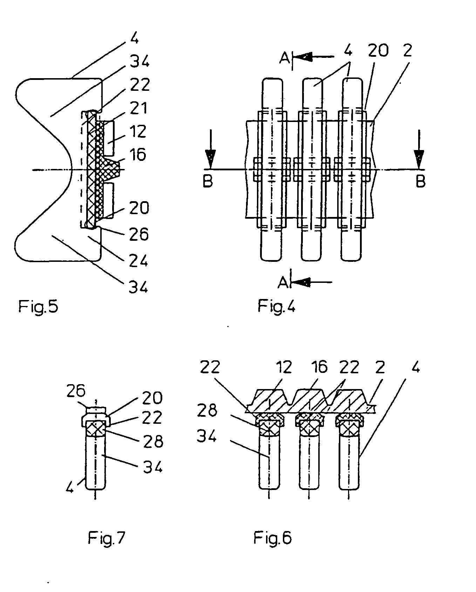

Figur 4 zeigt drei Führungselemente 4 während sie auf einem Transportelement 2 befestigt sind. Sie sind dabei jeweils auf einem Halteabschnitt 20 angeordnet, der Teil des Transportelementes 2 ist. Der Halteabschnitt 20 überragt den Rest des Transportelementes 2 in der Höhe und er überragt das Führungselement 2 seitlich.

In Figur 5 ist das auf dem Transportelement 2 befestigte Führungselement 4 in einer Schnittansicht entlang der Schnittkante A-A gemäß Figur 4 dargestellt. Das als Zahnriemen ausgebildete Transportelement 2 weist Zahnriemenzähne 12 und eine Nase 16 sowie einen Halteabschnitt 20 auf. Die Zahnriemenzähne 12 nehmen Kräfte in Bewegungsrichtung und damit gemäß dieser Darstellung in die Zeichenebene hinein auf. Die Nase 16 ist so ausgebildet, dass sie Kräfte in senkrechter Richtung aufnimmt und damit verhindert, dass der Zahnriemen von den Zahnrädern herunterrutscht.

Der Halteabschnitt 20, der den Rest des Transportelementes 2 überragt, bietet im Wesentlichen eine gerade Ansatzkante zum Führungselement 4 hin. Weiterhin ist durch eine gestrichelte Linie ein Stützelement 22 zu erkennen, dass diese Ansatzkante 21 des Halteabschnitts in Richtung des Führungselementes überragt. Das Führungselement 4 sitzt im Wesentlichen an der Ansatzkante 21 und wird durch zwei Vorsprünge 24, die an jeweils einer Stelle einen hakenartigen Abschnitt 26 aufweisen, auf dem Halteabschnitt 20 gehalten, mit dem sie so verrastet sind.

Figur 6 zeigt drei auf dem Transportelement 2 montierte Führungselemente 4 im Querschnitt entlang der Schnittkante B-B gemäß Figur 4. Jeweils zwei Stützelemente 22 umfassen ein Führungselement 4.

Weiterhin ist das Transportelement 2 zu erkennen, das in diesem Abschnitt drei Zähne 12 sowie die Nase 16 aufweist. Damit der Zahnriemen geschmeidig um die Zahnräder herumgeführt werden kann, ist die Nase 16 geschlitzt ausgeführt, so dass sie in der Figur 6 als drei Einzelelemente erscheint.

In Figur 7 ist allein ein Halteabschnitt 20 zusammen mit einem darauf montieren Führungselement 4 im Querschnitt dargestellt, die Perspektive entspricht der von Figur 6. Es ist hier deutlich die U-Förmigkeit des Halteabschnitts 20 zu erkennen. Der montierte Halteabschnitt 20 wird von den Stützelementen 22 seitlich überragt und umfasst. Der hakenartige Abschnitt 26 überragt hingegen den Halteabschnitt 20 in der anderen Richtung.

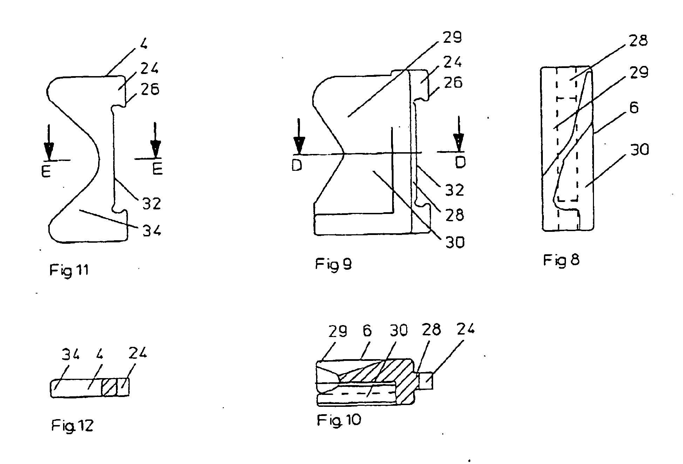

Figur 8 zeigt ein Abteilelement 6 von einer Vorderansicht. Das Abteilelement 6 weist einen Befestigungsabschnitt 28, einen ersten Abteilabschnitt 29 und einen zweiten Abteilabschnitt 30 auf. Die beiden Abteilabschnitte 29 und 30 weisen einen kleinen Zwischenraum zwischen sich auf, in dem ein Stück Darm, aus dem die Füllung herausgedrückt wurde, Platz finden kann.

Figur 9 zeigt das Abteilelement 6 in einer Seitenansicht gemäß Figur 8. Hier ist zu erkennen, dass der Befestigungsabschnitt 28 wie auch beim Führungselement 4 zwei Vorsprünge 24 mit jeweils einem hakenartigen Abschnitt 26 aufweist.

Es ist zu erkennen, dass die Kanten des ersten und zweiten Abteilabschnitts V-förmig aufeinander zulaufen. Im Bereich des Berührungspunktes beider Kanten kann der Darm, aus dem die Füllung an der Stelle bereits herausgedrückt wurde, aufgenommen und geführt werden.

Figur 10 zeigt ein Abteilelement 6 im Schnitt entlang der Schnittkante D-D gemäß Figur 9. Es ist deutlich der Befestigungsabschnitt 28, und der erste und zweite Abteilabschnitt 29, 30 zu erkennen. Der Befestigungsabschnitt 28 hat die gleiche Breite wie das Führungselement 4. Das Abteilelement 6 ist jedoch deutlich breiter als der Befestigungsabschnitt 28. Die große Breite des Befestigungsabschnitts 28 ergibt sich hier funktionsbedingt. Die schmale, mit dem Führungselement 4 identische Breite ermöglicht, Führungs- und Abteilelemente 4, 6 auf dem Transportelement 2 beliebig gegeneinander zu tauschen.

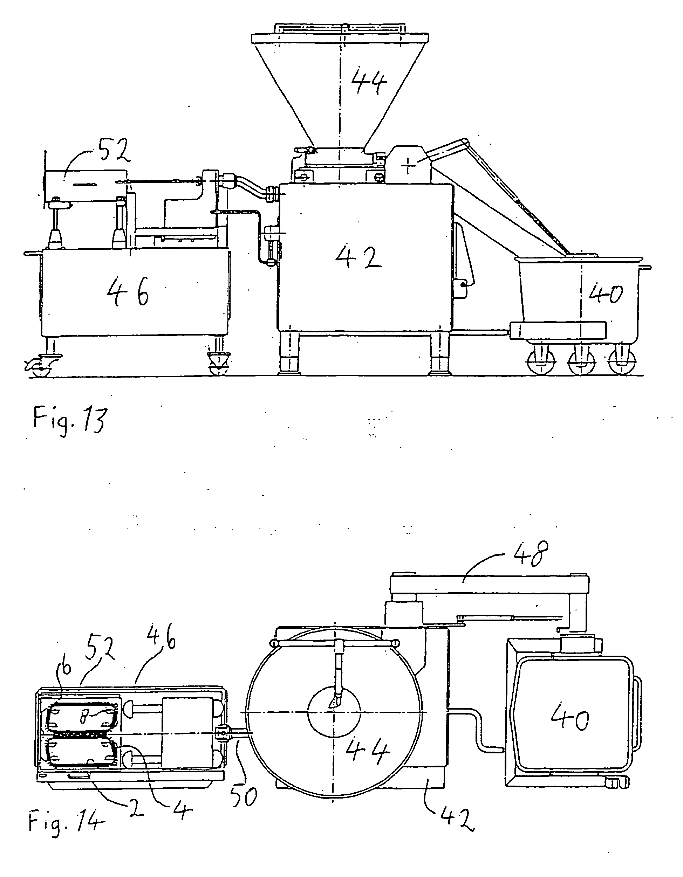

Figur 11 zeigt ein Führungselement 4 in seitlicher Ansicht. Das Führungselement ist aus einem Stück gefertigt, weist in dieser Darstellung an der linken Seite eine Öffnung zum Aufnehmen eines befüllten Darms auf, wohingegen die rechte Seite zum Befestigen an einem Halteabschnitt 20 ausgebildet ist. Die Seite zum Führen des befüllten Darms ist im Wesentlichen rund ausgebildet, um ein beschädigen des befüllten Darms zu verhindern. Der Befestigungsabschnitt 28 besteht im Wesentlichen aus einer Ansatzkante 32, zwei Vorsprüngen 24 und daran ansetzend jeweils einem hakenförmigen Abschnitt 26.

Figur 12 zeigt ein Führungselement 4 im Querschnitt entlang der Schnittkante E-E gemäß Figur 11. In dieser Schnittdarstellung ist im Wesentlichen der Führungsschenkel 34 und der Befestigungsabschnitt 28 zu erkennen. Auch hier ist der Übergang vom Führungsschenkel zum Befestigungsabschnitt rund ausgebildet, um Beschädigung des befüllten Darms zu verhindern. Es wird deutlich, dass das Führungselement 4 auf einfache Weise ausgebildet ist. Dennoch kann es die Aufgabe des Führens des befüllten Darms erfüllen und ist dabei gleichzeitig auf einfache äußerst wirksame Weise an einem Transportelement flexibel befestigbar.

Figur 13 zeigt eine Anlage zur Herstellung von Würstchen, bei der die erfindungsgemäße Portionier- und Führungsvorrichtung Anwendung findet. In dieser Darstellung ist auf der rechten Seite ein Transportwagen 40 zum Bereitstellen von Wurstbrät dargestellt. Etwa in der Mitte der Figur ist eine Füllmaschine 42 mit aufgesetztem Trichter 44 zum Aufnehmen des Wurstbrätes oder einer anderen Füllmasse dargestellt. Die Füllmasse wird dann der Abfüllvorrichtung 46 zugeführt, die etwa im linken Drittel der Figur dargestellt ist. Hier erfolgt die Befüllung des Darms und anschließend die Portionierung in die einzelnen Würstchen.

Figur 14 zeigt die Anlage zur Herstellung von Würstchen gemäß Figur 13 in einer Draufsicht. Der Transportwagen 40 wird von einem Arm 48 gehalten und zum Entleeren über den Trichter 44 gehoben. Die im Transportwagen 40 angelieferte Füllmasse gelangt somit in den Trichter 44 und von dort aus in die Pumpe (nicht dargestellt), in der die Füllmasse hergestellt wird. Von der Pumpe wird die Füllmasse durch das Zuführrohr 50 zur Abfüllvorrichtung 46. In der Abfüllvorrichtung 46 wird die Füllmasse dann in eine Hülle gefüllt, die der Portionier- und Führungsvorrichtung 52 zugeführt wird. Hier sind deutlich die acht Synchronscheiben 8 mit den Transportelementen 2 und den darauf befestigten Führungselementen 4 und befestigten Abteilelementen 6 zu erkennen.

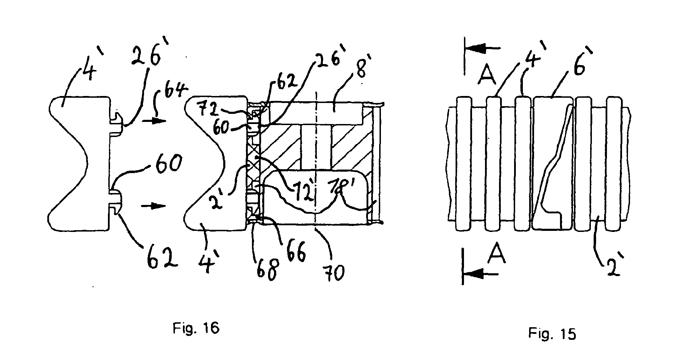

Die Führungselemente 4' und das Abteilelement 6' gemäß Figur 15 sind auf dem Zahnriemen 2' befestigt. Die Führungselemente 4' sowie das Abteilelement 6' sind, gemessen von ihrem Mittelpunkt, auf dem Transportriemen 2' äquidistant angeordnet. Die Art der Befestigung lässt sich in einer Schnittansicht entlang der Schnittlinie A-A wie in Figur 16 gezeigt erkennen.

In der Figur 16 ist auf der linken Seite ein Führungselement 4' mit zwei hakenartigen Abschnitten 26', die jeweils mit einem etwa zylindrischen, teilweise abgeflachten Steg 60 und einer Haltezunge 62 versehen sind. Die Einsetzfeile 64 zeigen die Richtung zum Einsetzen des Führungselementes 4' in den Zahnriemen 2'.

Im rechten Teil der Figur 16 ist das Führungselement 4' an dem Zahnriemen 2' befestigt, der wiederum an der Synchronscheibe 8' anliegt. Der Zahnriemen 2' weist Zahnriemenzähne 12' auf, die mit den Zähnen 18' der Synchronscheibe 8' im Eingriff sind. Weiterhin weist der Zahnriemen 2' Führungszähne 66 auf, die zusammen mit dem Führungsrand 68 der Synchronscheibe 8' den Zahnriemen 2' in axialer Position halten und somit den Zahnriemen 2' führen. Hierbei bezieht sich eine axiale Richtung auf die Achse 70 der Synchronscheibe 8'.

Der hakenartige Abschnitt 26' ragt mit seinem Steg 60 durch die Aussparung 72 des Zahnriemens 2' und hakt mit der Haltezunge 62 aus Sicht des Führungselementes 4' hinter den Zahnriemen 2'. Die Aussparung 72 ist etwa als rundes Loch ausgebildet. Der Zahnriemen 2' umfasst den hakenartigen Abschnitt 26' im Bereich des Steges 60 eng und sorgt dadurch für einen festen Halt des Führungselementes 4' sowohl in axialer als auch in Bewegungsrichtung, die in Figur 16 in die Bildebene hinein weist. Das Herausrutschen des Führungselementes 4' aus den Zahnriemen 2' in Richtung quer zur Bewegung und quer zur Achse wird durch die Haltezungen 62 verhindert.

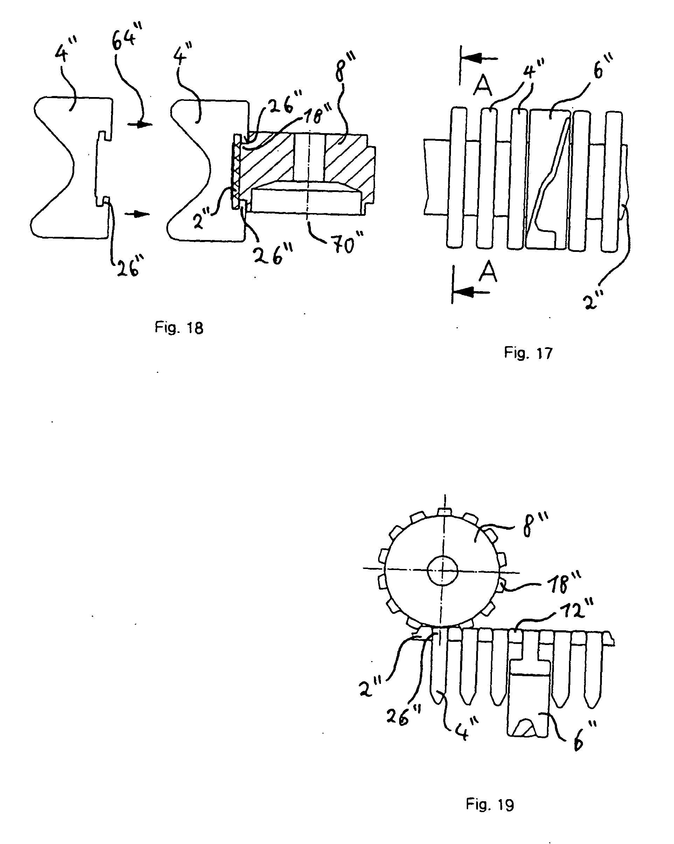

Figur 17 zeigt eine dritte alternative Ausgestaltung zur Befestigung von Führungselementen 4" und Abteilelementen 6" auf einem Zahnriemen 2". Der Zahnriemen 2' dieser alternativen Ausgestaltung ist wesentlich schmaler als der Zahnriemen 2' der alternativen Ausgestaltung gemäß Figur 15.

Das Befestigungsprinzip gemäß der dritten alternativen Ausgestaltung ist in der Schnittansicht gemäß Figur 18 zu erkennen. Das im linken Teil der Figur 18 dargestellte Führungselement 4" weist zwei hakenartige Abschnitte 26" auf, und ist in Richtung der Einsetzfeile 64" auf den Zahnriemen 2" aufzusetzen.

Im rechten Teil der Figur 18 ist das Führungselement 4' auf dem Zahnriemen 2" befestigt, der an der Synchronscheibe 8" anliegt und mit ihr im Eingriff ist. Das Führungselement 4" umklammert den Zahnriemen 2" mit seinen hakenartigen Abschnitten 26". Zur Befestigung des Führungselementes 4" auf dem Zahnriemen 2" kann der Zahnriemen 2" gebogen werden, um zwischen den beiden hakenartigen Abschnitten 26" hindurchzupassen. Das Führungselement 4" ist einschließlich seiner hakenartigen Abschnitte 26" aus einem im Wesentlichen starren Kunststoff gefertigt. Es kann alternativ auch die hakenartigen Abschnitte 26" elastisch verformbar ausgebildet sein, um eine Schnappverbindung herstellen zu können.

Die hakenartigen Abschnitte 26" schließen weiterhin einen Zahn 18" der Synchronscheibe 8" von zwei Seiten ein und verhindern dadurch ein Verrutschen des Zahnriemens 2" in axialer Richtung, bezogen auf die Achse 70" der Synchronscheibe 8".

Gemäß der Draufsicht der Figur 19 greifen die Zähne 12" des Zahnriemens 2" in die Zähne 18" der Synchronscheibe 8". Die Führungselemente 4" und das Abteilelement 6" umgreifen den Zahnriemen 2" mit ihren hakenartigen Abschnitten 26". Dabei können sie gleichzeitig, wie bei den beiden links dargestellten Führungselementen 4" zu erkennen, über jeweils einen Zahn 18" der Synchronscheibe 8" greifen.

Mit Hilfe der erfindungsgemäßen Portionier- und/oder Führungsvorrichtung kann somit auf einfache Weise die Portionierung von Würstchen gewährleistet werden, wobei gleichzeitig Reparatur- und Wartungsarbeiten an der Anlage vereinfacht sind und weiterhin die Umrüstung der Anlage für unterschiedliche Würstchenlängen als auch für unterschiedliche Würstchenkaliber mit geringem Aufwand bewerkstelligt werden kann.

## Patentansprüche

1. Portionier- und/oder Führungsvorrichtung zum Portionieren und/oder Führen länglicher Hüllen, insbesondere Wursthüllen aus Kunst- oder Naturdärmen, mit mindestens einem umlaufenden Transportelement (2) zum Transportieren der befüllten Hülle
und mindestens einem Abteil- oder Führungselement (6, 4) zum Portionieren oder Führen der befüllten Hülle,
wobei das Abteil- oder Führungselement (6, 4) mittels formschlüssiger Verbindung mit dem Transportelement (2) im Eingriff steht,
**dadurch gekennzeichnet, dass** das Transportelement (2) als Zahnriemen ausgebildet ist, wobei das Abteil- oder Führungselement (6, 4) an der den Zahnriemenzähnen (12) abgewandten Seite mittels Schnappverbindung lösbar befestigbar ist.

2. Portionier- und/oder Führungsvorrichtung nach Anspruch 1,
**dadurch gekennzeichnet, dass** das Transportelement (2) mindestens einen Halteabschnitt (20) zum Aufnehmen von mindestens einem der Abteil- oder Führungselemente (6, 4) aufweist.

3. Portionier- und/oder Führungsvorrichtung nach Anspruch 2,
**dadurch gekennzeichnet, dass** der Halteabschnitt (20) Stützelemente (22) zum Aufnehmen von Quer- und/oder Drehkräften aufweist.

4. Portionier- und/oder Führungsvorrichtung nach einem der vorherigen Ansprüche,
**dadurch gekennzeichnet, dass** der Halteabschnitt (20) im Querschnitt etwa U-förmig ausgebildet ist.

5. Portionier- und/oder Führungsvorrichtung nach einem der vorherigen Ansprüche,
**dadurch gekennzeichnet, dass** das Transportelement (2) Aussparungen (72) zum Befestigen des Abteil- und/oder Führungselements aufweist.

6. Portionier- und/oder Führungsvorrichtung nach einem der vorherigen Ansprüche,
**dadurch gekennzeichnet, dass** an dem Transportelement (2) mindestens ein Führungselement (4) zum Führen der befüllten Hülle und mindestens ein Abteilelement (6) zum Portionieren der Hülle mittels Schnappverbindung lösbar befestigt ist.

7. Portionier- und/oder Führungsvorrichtung nach einem der vorherigen Ansprüche,
**dadurch gekennzeichnet, dass** das Transportelement (2), der Halteabschnitt (20), das Abteil- und/oder das Führungselement aus Kunststoff gefertigt sind.

8. Portionier- und/oder Führungsvorrichtung nach einem der vorherigen Ansprüche,
**dadurch gekennzeichnet, dass** das Abteil- oder Führungselement (6, 4) einen Befestigungsabschnitt (28) mit Schnappmittel zum lösbaren Befestigen des Abteil- oder Führungselementes (6, 4) auf dem Transportelement (2) aufweist.

9. Portionier- und/oder Führungsvorrichtung nach Anspruch 8,
**dadurch gekennzeichnet, dass** das Schnappmittel mindestens zwei, sich paarweise etwa gegenüberliegend angeordnete Vorsprünge (24) aufweist.

10. Portionier- und/oder Führungsvorrichwng nach Anspruch 8 oder 9,
**dadurch gekennzeichnet, dass** das Schnappmittel mindestens einen hakenartigen Abschnitt (26) zum Hinterklammern des Transportelements (2) aufweist.

11. Portionier- und/oder Führungsvorrichtung nach einem der Ansprüche 8 bis 10,
**dadurch gekennzeichnet, dass** der Befestigungsabschnitt (28) zum mindestens teilweisen Umgreifen des Transportelements (2) ausgebildet ist.

12. Portionier- und/oder Führungsvorrichtung nach einem der Ansprüche 8 bis 11.
**dadurch gekennzeichnet, dass** das Abteil- und/oder Führungselement mit Führungsabschnitten ausgestaltet ist Fähren des Transportelements (2) entlang mindestens einer Antriebsrolle oder ein Leitelement, insbesondere einer Synchronscheibe (8).

13. Portionier- und/oder Fohrungsvorfichtung nach einem der vorherigen Ansprüche,
**dadurch gekennzeichnet, dass** der Befestigungsabschnitt (28) mit dem Halteabschnitt (20) verklammert ist.

## Claims

1. A portioning and/or guiding device for portioning and/or guiding elongated casings, particularly sausage casings made of synthetic or natural intestines, comprising at least one circulating conveying element (2) for conveying the filled casing
and at least one dividing or guiding element (6, 4) for portioning or guiding the filled casing,
the dividing or guiding element (6, 4) being in engagement with the conveying element (2) by means of a positive-locking connection,
**characterised in that** the conveying element (2) is a toothed belt, the dividing or guiding element (6, 4) being releasably attachable to the side remote from the toothed belt teeth (12) by means of a snap-action connection.

2. A portioning and/or guiding device according to Claim 1,
**characterised in that** the conveying element (2) has at least one holding portion (20) for receiving at least one of the dividing or guiding elements (6, 4).

3. A portioning and/or guiding device according to Claim 2,
**characterised in that** the holding portion (20) has supporting elements (22) for absorbing transverse and/or torsional forces.

4. A portioning and/or guiding device according to one of the preceding claims,
**characterised in that** the holding portion (20) is designed so as to be approximately U-shaped in cross-section.

5. A portioning and/or guiding device according to one of the preceding claims,
**characterised in that** the conveying element (2) has recesses (72) for the attachment of the dividing and/or guiding element.

6. A portioning and/or guiding device according to one of the preceding claims,
**characterised in that** at least one guiding element (4) for guiding the filled casing and at least one dividing element (6) for portioning the casing is releasably attached to the conveying element (2) by means of a snap-action connection.

7. A portioning and/or guiding device according to one of the preceding claims,
**characterised in that** the conveying element (2), the holding portion (20), the dividing and/or the guiding element are manufactured from plastics material.

8. A portioning and/or guiding device according to one of the preceding claims,
**characterised in that** the dividing or guiding element (6, 4) has an attachment portion (28) with snap-action means for the releasable attachment of the dividing or guiding element (6, 4) on the conveying element (2).

9. A portioning and/or guiding device according to Claim 8,
**characterised in that** the snap-action means has at least two projections (24), disposed in pairs approximately opposite one another.

10. A portioning and/or guiding device according to Claim 8 or 9,
**characterised in that** the snap-action means has at least one hook-like portion (26) for clipping behind the conveying element (2).

11. A portioning and/or guiding device according to one of Claims 8 to 10,
**characterised in that** the attachment portion (28) is designed to engage at least partially around the conveying element (2).

12. A portioning and/or guiding device according to one of Claims 8 to 11,
**characterised in that** the dividing and/or guiding element is provided with guide portions for guiding the conveying element (2) along at least one drive roller or a directing element, particularly a synchronised pulley (8).

13. A portioning and/or guiding device according to one of the preceding claims, **characterised in that** the attachment portion (28) is clamped together with the holding portion (20).

## Revendications

1. Dispositif de formation de portions et/ou de guidage destiné à mettre en portions et/ou à guider des enveloppes ou gaines allongées, notamment des enveloppes de saucisses en boyau artificiel ou naturel, comprenant au moins un élément de transport (2) en révolution pour transporter l'enveloppe remplie,
et au moins un élément de subdivision ou de guidage (6, 4) pour mettre en portions ou guider l'enveloppe remplie,
l'élément de subdivision ou de guidage (6, 4) étant en prise par une liaison par complémentarité de forme avec l'élément de transport (2),
**caractérisé en ce que** l'élément de transport (2) est réalisé sous forme de courroie crantée, l'élément de subdivision ou de guidage (6, 4) pouvant être fixé de manière amovible sur le côté opposé à celui où se trouvent les dents (12) de courroie crantée, au moyen d'une liaison par enclenchement.

2. Dispositif de formation de portions et/ou de guidage selon la revendication 1, **caractérisé en ce que** l'élément de transport (2) présente au moins un tronçon de support (20) destiné à recevoir au moins l'un des éléments de subdivision ou de guidage (6, 4).

3. Dispositif de formation de portions et/ou de guidage selon la revendication 2, **caractérisé en ce que** le tronçon de support (20) présente des éléments d'appui (22) pour absorber des forces transversales et/ou de rotation.

4. Dispositif de formation de portions et/ou de guidage selon l'une des revendications précédentes, **caractérisé en ce que** le tronçon de support (20) est réalisé, en section transversale, sensiblement en forme de U.

5. Dispositif de formation de portions et/ou de guidage selon l'une des revendications précédentes, **caractérisé en ce que** l'élément de transport (2) présente des évidements (72) pour la fixation de l'élément de subdivision et/ou de guidage.

6. Dispositif de formation de portions et/ou de guidage selon l'une des revendications précédentes, **caractérisé en ce que** sur l'élément de transport (2) sont fixés de manière amovible, au moins un élément de guidage (4) pour guider l'enveloppe remplie, et au moins un élément de subdivision (6) pour mettre en portions l'enveloppe.

7. Dispositif de formation de portions et/ou de guidage selon l'une des revendications précédentes, **caractérisé en ce que** l'élément de transport (2), le tronçon de support (20), l'élément de subdivision et/ou l'élément de guidage sont fabriqués en matière plastique.

8. Dispositif de formation de portions et/ou de guidage selon l'une des revendications précédentes, **caractérisé en ce que** l'élément de subdivision ou de guidage (6, 4) présente un secteur de fixation (28) avec des moyens d'enclenchement pour la fixation amovible de l'élément de subdivision ou de guidage (6, 4) sur l'élément de transport (2).

9. Dispositif de formation de portions et/ou de guidage selon la revendication 8, **caractérisé en ce que** le moyen d'enclenchement comprend au moins deux protubérances (24) agencées sensiblement de manière mutuellement opposée par paires.

10. Dispositif de formation de portions et/ou de guidage selon la revendication 8 ou 9, **caractérisé en ce que** le moyen d'enclenchement présente au moins un secteur en forme de crochet (26) pour s'engager à la manière d'une agrafe derrière l'élément de transport (2).

11. Dispositif de formation de portions et/ou de guidage selon l'une des revendications 8 à 10, **caractérisé en ce que** le secteur de fixation (28) est réalisé pour entourer au moins partiellement l'élément de transport (2).

12. Dispositif de formation de portions et/ou de guidage selon l'une des revendications 8 à 11, **caractérisé en ce que** l'élément de subdivision et/ou de guidage est pourvu de secteurs de guidage pour le guidage de l'élément de transport (2) le long d'au moins une poulie ou d'un galet d'entraînement ou un élément de guidage, notamment une poulie ou un disque synchrone.

13. Dispositif de formation de portions et/ou de guidage selon l'une des revendications précédentes, **caractérisé en ce que** le secteur de fixation (28) est agrafé avec le tronçon de support (20).
